# FASCICULE DE BREVET EUROPEEN

(11) **EP 3 402 703 B1**
(45) Date de publication et mention de la délivrance du brevet: **01.01.2020**
(21) Numéro de dépôt: 17700134.4
(22) Date de dépôt: 06.01.2017
(51) Int. Cl.: B60S 1/40

(54) **ADAPTATEUR POUR RELIER UN BALAI D'ESSUIE-GLACE À UN BRAS D'ENTRAÎNEMENT**
ADAPTER ZUM ANSCHLIESSEN EINES WISCHBLATTS AN EINEM ANTRIEBSARM
ADAPTER FOR CONNECTING A WIPER BLADE TO A DRIVE ARM

(30) Priorité: 13.01.2016 FR 1650255
(43) Date de publication de la demande: 21.11.2018
(73) Titulaire: Valeo Systèmes d'Essuyage, 78322 Le Mesnil Saint Denis (FR)
(72) Inventeur: GAUCHER, Vincent, 63500 Issoire (FR); HOUSSAT, Stéphane, 63500 Issoire (FR); WANG, Qibin, 200233 Shangai (FR)
(74) Mandataire: Valeo Systèmes d'Essuyage
(86) Numéro de dépôt international: PCT/EP2017/050266
(87) Numéro de publication internationale: WO 2017/121687

(56) Documents cités:
- JP-A- 2001 354 120
- US-A1- 2009 293 218

## Description

La présente invention concerne notamment un adaptateur pour relier un balai d'essuie-glace à un bras d'entraînement, en particulier de véhicule automobile.

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée *"flat blade"* (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un adaptateur et un connecteur. Le connecteur est une pièce qui est solidarisée au balai et qui peut être intégré au balai. Le connecteur est fixé directement sur la lame racleuse ou sur le *flat blade,* alors que l'adaptateur est solidaire du bras. L'adaptateur est une pièce intermédiaire qui permet la liaison et la fixation du connecteur sur le bras d'entraînement. Il est configuré pour coopérer avec une tête ou pièce terminale du bras d'entraînement.

Le connecteur et l'adaptateur comprennent chacun des moyens d'articulation configurés pour coopérer avec des moyens complémentaires de l'autre organe, pour définir au moins un axe transversal de pivotement du connecteur vis-à-vis de l'adaptateur, qui est un axe de pivotement du balai vis-à-vis du bras. Dans la technique actuelle, l'un des organes, tel que le connecteur, comprend en général un axe physique sensiblement cylindrique qui définit l'axe d'articulation et qui est reçu dans un logement de forme complémentaire de l'autre organe.

Dans certains cas, l'adaptateur est monté dans un logement du connecteur ou du balai et comprend deux parois sensiblement parallèles et à distance l'une de l'autre, reliées ensemble par au moins un élément de liaison. Les parois de l'adaptateur comportent des faces latérales internes entre lesquelles s'étend cet élément de liaison, et des faces latérales externes qui sont destinées à être situées en regard de faces latérales internes du logement du connecteur ou du bras, et à coopérer par glissement avec ces faces lors du pivotement de l'adaptateur vis-à-vis du connecteur ou du balai.

Pour cela, les faces latérales externes des parois de l'adaptateur comprennent des motifs en saillie qui définissent à leurs sommets des surfaces d'appui et de guidage. Dans la technique actuelle telle qu'illustrée par le document FR-A1-2 957 877, les motifs sont peu nombreux et ont une forme générale incurvée autour de l'axe de pivotement précité. US-A-2009/0293218 montre le préambule de la revendication 1.

L'invention propose un perfectionnement à cette technologie.

L'invention propose à cet effet un adaptateur pour relier un balai d'essuie-glace à un bras d'entraînement, l'adaptateur comprenant deux parois sensiblement parallèles reliées ensemble par au moins un élément de liaison, lesdites parois comportant des premières faces latérales internes entre lesquelles s'étend ledit au moins un élément de liaison, et des faces latérales externes comportant des motifs en saillie de guidage par glissement, lesdits motifs étant répartis en lignes et colonnes.

L'invention présente de nombreux avantages. Elle est applicable à un adaptateur de petites dimensions et les motifs, qui peuvent être plus nombreux du fait de leur disposition en lignes et colonnes, peuvent avoir une ou des épaisseurs relativement faibles par rapport à la technique antérieure. Pour des parois d'épaisseur donnée, elle permet de rigidifier les parois ainsi que l'adaptateur dans son ensemble. Ceci est particulièrement avantageux car la rigidité de l'adaptateur peut avoir une influence sur la précision de contrôle du balai en fonctionnement. La distribution des motifs permet également d'améliorer le guidage de l'adaptateur en limitant les portions de parois non guidées. L'invention permet par ailleurs de conserver un bon drainage de l'eau entre les parois de l'adaptateur et du connecteur ou du balai, les motifs en saillie délimitant entre eux des canaux de drainage. Ceci permet d'éviter des phénomènes d'adhésion des parois en particulier lorsque leurs surfaces en contact sont lisses et séparées par un film d'eau. L'invention permet de mieux maîtriser l'épaisseur de l'adaptateur. Enfin, elle permet un guidage latéral optimal et une force de transmission optimale entre l'adaptateur et le connecteur ou le balai.

Selon l'invention, lesdits motifs sont séparés les uns des autres par des rainures formant des canaux de drainage. De plus, les canaux de drainage sont, sur au moins une partie de leur longueur, inclinés par rapport à l'axe longitudinal de l'adaptateur.

Dans le cadre de l'invention, l'expression « être incliné par rapport à l'axe longitudinal de l'adaptateur signifie ne pas être parallèle ni perpendiculaire au dit axe. Autrement dit, l'angle formé par l'inclinaison avec l'axe longitudinal est compris strictement entre 0° et 90°.

L'adaptateur selon l'invention peut comprendre une ou plusieurs des caractéristiques suivantes, prises isolément les unes des autres ou en combinaison les unes avec les autres :
- lesdits motifs recouvrent plus de 50%, et de préférence plus de 80%, desdites faces latérales externes,
- lesdits motifs ont des formes géométriques identiques,
- au moins une partie desdits motifs forme des carrés, des ronds, des losanges, des triangles, et/ou des polygones (par exemple du type nid d'abeilles),
- les motifs ont tous la même épaisseur,
- l'adaptateur comprend, sur chacune desdites faces latérales externes, des premiers motifs d'épaisseur E1 et des seconds motifs d'épaisseur E2 différente de E1,
- chacune desdites faces latérales externes comprend plus de dix motifs,
- ledit au moins élément de liaison définit une goulotte qui est sensiblement perpendiculaire auxdites parois et qui est configuré pour recevoir et guider un axe de rotation dudit adaptateur,
- au moins certaines des lignes et/ou des colonnes sont rectilignes,
- au moins certaines des lignes et/ou des colonnes sont parallèles,
- au moins certaines des lignes et/ou des colonnes sont incurvées,
- au moins certaines des lignes sont perpendiculaires à au moins certaines des colonnes,
- lesdits canaux de drainage forment un quadrillage,
- chacune desdites rainures a une largeur comprise entre 0,1 et 1 mm et par exemple de l'ordre de 0,5mm, et
- chacune desdites rainures a en section une forme en U ou V.

La présente invention concerne également un balai ou un bras d'essuie-glace, caractérisé en ce qu'il comprend ou porte un adaptateur tel que décrit ci-dessus.

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective éclatée d'un balai d'essuie-glace, cet essuie-glace étant équipé d'un adaptateur de connexion du balai à un bras d'entraînement,
- la figure 2 est une vue schématique en perspective d'un adaptateur, d'un connecteur et d'une extrémité d'un bras d'entrainement,
- la figure 3 est une autre vue schématique en perspective de l'adaptateur de la figure 2,
- les figures 4a et 4b sont des vues schématiques en perspective d'un adaptateur selon l'invention,
- les figures 5 et 6 sont des vues schématiques partielles en perspective de balais d'essuie-glace équipés de l'adaptateur des figures 4a et 4b,
- les figures 7a à 7d représentent des variantes de réalisation des motifs d'un adaptateur selon l'invention, et
- la figure 8 est une vue schématique en coupe d'une paroi latérale d'un adaptateur selon l'invention, et montre des motifs d'épaisseurs différentes.

Il faut noter que les figures exposent l'invention de manière détaillée pour mettre en œuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure (ou arrière) ou intérieure (ou avant) s'apprécient par rapport au point de fixation du balai sur le bras, la dénomination intérieure correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du balai d'essuie-glace, la dénomination inférieure contenant le plan du pare-brise.

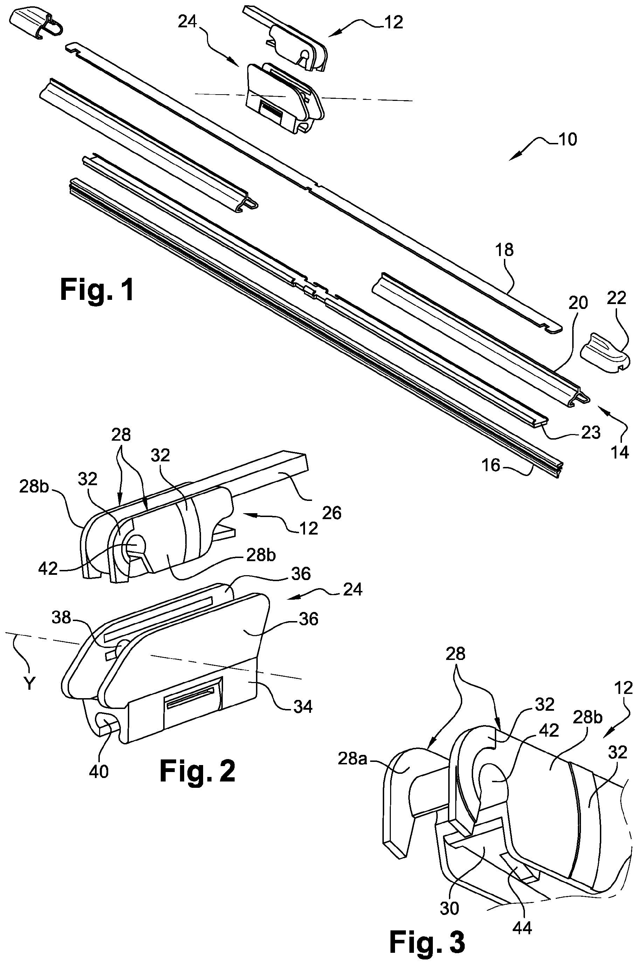

Il est illustré à la figure 1 un balai d'essuie-glace 10 équipé d'un adaptateur 12.

Le balai 10 est du type *flat blade* dans l'exemple représenté et comprend un corps longitudinal 14, une lame d'essuyage 16, en général en caoutchouc, et au moins une vertèbre 18 qui rigidifie la lame et favorise son application sur une vitre telle qu'un pare-brise de véhicule.

Le corps 14 du balai 12 peut comporter un déflecteur aérodynamique supérieur 20 destiné à améliorer le fonctionnement du système d'essuyage, le but de ce déflecteur étant d'améliorer le plaquage du balai sur le pare-brise et donc la performance aérodynamique de l'essuie-glace.

Le balai 10 peut comprendre en outre des embouts d'extrémité 22 ou agrafes d'accrochage de la lame 16 et de la vertèbre 18 sur le corps 14, ces embouts 22 étant situés à chacune des extrémités longitudinales du corps 14.

Le balai 10 comprend également un élément 23 de fixation de la lame 16, qui est logé dans le corps 14.

Le balai 10 comprend sensiblement en son milieu un connecteur 24 qui est destiné à recevoir l'adaptateur 12, l'ensemble connecteur-adaptateur formant un système de connexion du balai 10 à un bras d'entraînement (non représenté en figure 1).

L'adaptateur 12 est monté sur le connecteur 24 de façon à garder un degré de liberté en pivotement autour d'un axe d'articulation Y qui est un axe transversal sensiblement perpendiculaire à l'axe longitudinal du balai 10. Ce degré de liberté autorise un pivotement du balai 10 vis-à-vis du bras et permet ainsi au balai de suivre la courbure du pare-brise lors de ses déplacements.

Le bras 26, visible à la figure 2, est destiné à être entraîné par un moteur pour suivre un mouvement angulaire de va-et-vient permettant d'évacuer l'eau et éventuellement d'autres éléments indésirables recouvrant le pare-brise. Son extrémité libre de liaison à l'adaptateur 12 forme un crochet en U dans l'ouverture duquel est destiné à être monté l'adaptateur 12.

L'adaptateur 12 comprend deux parois latérales parallèles 28 qui sont à distance l'une de l'autre et reliées ensemble par au moins une paroi transversale 30 (figure 3). Les parois 28 comportent des faces latérales internes 28a entre lesquelles s'étend la paroi transversale 30, et des faces latérales externes 28b comportant des motifs en saillie 32.

Le connecteur 24, mieux visible à la figure 2, comprend un socle 34 de forme sensiblement parallélépipédique surmonté de deux parois latérales 36 qui s'étendent dans le prolongement supérieur des faces latérales du socle et qui ont vocation à venir enserrer les parois latérales 28 de l'adaptateur une fois que ce dernier est encliqueté dans le connecteur 24.

L'écartement entre les parois 36 du connecteur 24 est en conséquence légèrement supérieur à celui existant entre les faces latérales externes 28b de l'adaptateur. Entre les deux parois 36 s'étend un axe transversal 38 définissant l'axe Y et autour duquel l'adaptateur 12 a vocation à tourner dans des limites angulaires prédéfinies. Enfin, la partie inférieure du socle 34 est découpé d'une rainure 40 de montage du reste du balai 10, et en particulier de l'élément de fixation 23.

La figure 3 montre d'autres détails de l'adaptateur 12 et en particulier de sa paroi transversale 30. A son extrémité externe, la paroi 30 se prolonge longitudinalement par une goulotte 42 semi-cylindrique de révolution destinée à recevoir l'axe transversal 38 du connecteur lors de l'encliquetage de celui-ci sur l'adaptateur. Pour assurer cet encliquetage, l'ouverture de la goulotte 42 est légèrement inférieure à 180°, de façon qu'il faille exercer une force pour faire entrer l'axe 38 dans la goulotte 42.

Sur la figure 3 est également visible un ergot 44 positionné sur la paroi transversale 30, qui permet, en coopération avec un orifice (non représenté) pratiqué dans la partie terminale en forme de U du bras 26, de solidariser ce dernier avec l'adaptateur 12.

Le montage de l'adaptateur 12 peut être réalisé de la façon suivante. Il est inséré entre les parois 36 du connecteur 24 jusqu'à ce que l'axe 38 s'encliquète dans la goulotte 42 de l'adaptateur, puis le bras 26 est engagé sur l'adaptateur de façon à ce que sa partie terminale obture l'ouverture de la goulotte 42 (figure 2) et empêche la désolidarisation de l'adaptateur du connecteur.

Les motifs en saillie 32 des faces externes 28b de l'adaptateur 12 ont pour fonction de coopérer par glissement avec les faces internes en regard des parois 36 du connecteur, afin notamment de guider le pivotement autour de l'axe Y du balai 10 vis-à-vis du bras 26 en fonctionnement.

Dans la technique actuelle telle qu'illustrée par les figures 1 à 3, ces motifs 32 ont une forme annulaire incurvée autour de l'axe de pivotement Y.

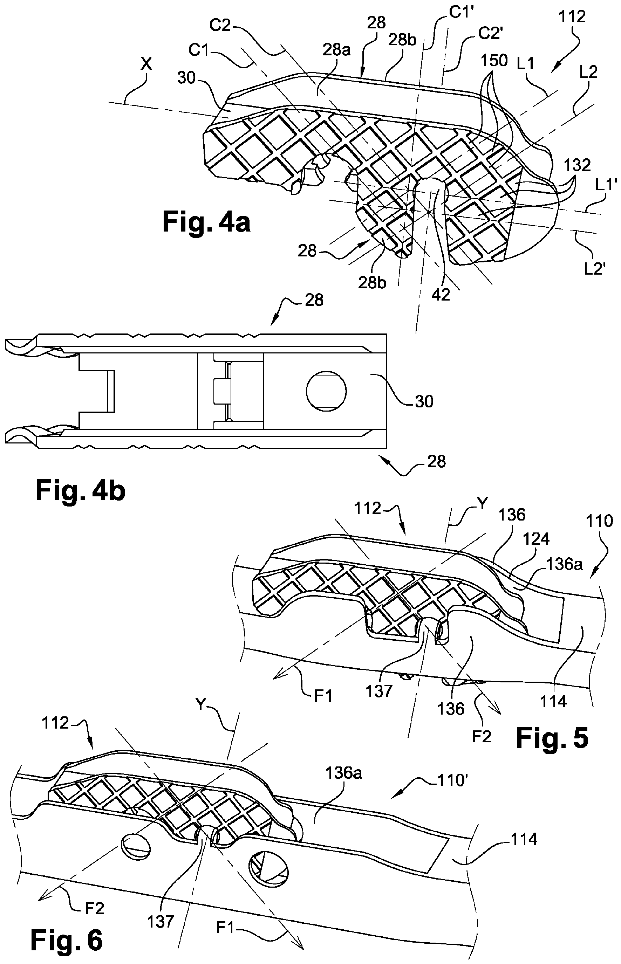

L'invention propose un perfectionnement de cette technologie et montre un mode de réalisation de l'adaptateur selon l'invention aux figures 4a et 4b.

L'adaptateur 112 des figures 4a et 4b peut comprendre toutes les caractéristiques de l'adaptateur 12, décrites dans ce qui précède, et diffère de cet adaptateur par la disposition des motifs en saillie 132 sur les faces externes 28b de ses parois latérales 28.

Dans l'exemple représenté, les motifs 132 sont répartis en lignes et colonnes. Les motifs 132 ont ici des formes géométriques identiques et sont ici des carrés ou losanges. Les lignes de motifs sont rectilignes et parallèles et les colonnes de motifs sont également rectilignes et parallèles.

Si on considère que les motifs 132 sont des carrés, les lignes L1, L2, etc., de motifs sont inclinées par rapport à l'axe d'allongement X de l'adaptateur. Les colonnes C1, C2, etc., de motifs sont inclinées par rapport à cet axe X.

Si en revanche on considère que les motifs 132 sont des losanges, les lignes L1', L2', etc., de motifs sont parallèles à l'axe d'allongement X de l'adaptateur, et les colonnes de motifs C1, C2, etc., sont perpendiculaires à cet axe X.

Les motifs 132 sont en saillie sur les faces externes 28b des parois 28 de l'adaptateur 112 et présentent à leurs sommets des surfaces sensiblement planes destinées à coopérer par glissement avec un connecteur, comme expliqué dans ce qui précède.

Les motifs 132 sont séparés les uns des autres par des rainures qui forment des canaux de drainage 150. Ces canaux sont destinés à faciliter l'écoulement notamment d'eau entre l'adaptateur et le connecteur en fonctionnement, de façon à limiter l'effet de l'eau sur le guidage précité. Les canaux de drainage qui sont inclinés par rapport à l'axe longitudinal de l'adaptateur. Autrement dit, ils forment un angle compris strictement entre 0° et 90° avec l'axe longitudinal de l'adaptateur.

La largeur de chaque rainure doit être suffisante pour laisser l'eau voire la boue s'écouler et ne pas stocker anormalement la poussière, la neige, le sel ou le gel. Cette largeur est comprise entre 0,1 et 1mm et est par exemple de 0,5mm. Cette largeur peut varier sur une même face externe.

Dans l'exemple représenté, les canaux 150 forment une grille ou un quadrillage. Comme on peut le voir à la figure 4b, les canaux 150 ont en section une forme sensiblement en V. En variante, ils pourraient avoir une autre forme en section, telle qu'en U.

Les motifs 132 sont ici présents sur l'intégralité des faces externes 28b de l'adaptateur 112, à l'exception des zones des parois latérales 28 sur lesquelles des encoches, lumières ou renfoncements sont ménagés.

L'adaptateur 112 peut être monté dans un connecteur 24 du type de celui décrit dans ce qui précède et représenté aux figures 1 à 3. En variante et comme représenté aux figures 5 et 6, le connecteur 124 peut être intégré et formé d'une seule pièce avec une partie du balai 110, 110' telle que son corps. Les figures 5 et 6 montrent que l'adaptateur 112 des figures 4a et 4b peut être monté dans deux balais 110, 110' différents, respectivement.

Le corps 114 de chacun des balais 110, 110' comprend, sensiblement en son milieu, deux parois latérales 136 espacées l'une de l'autre et définissant un espace de logement de l'adaptateur 112. Les parois 136 comportant sur leurs bords supérieurs des pattes 137 orientées l'une vers l'autre et définissant l'axe Y de pivotement du balai vis-à-vis de l'adaptateur, et donc du balai vis-à-vis du bras.

Les faces externes 28b de l'adaptateur 112 sont en regard des faces internes 136a des parois 136 du balai et les motifs 132 coopèrent par glissement avec ces faces internes afin de guider le pivotement du balai autour de l'axe Y. Les flèches F1, F2 montrent la direction d'écoulement de l'eau, de pluie par exemple, entre les faces 28b, 136a, dans les canaux 150 précités, lors du fonctionnement du balai.

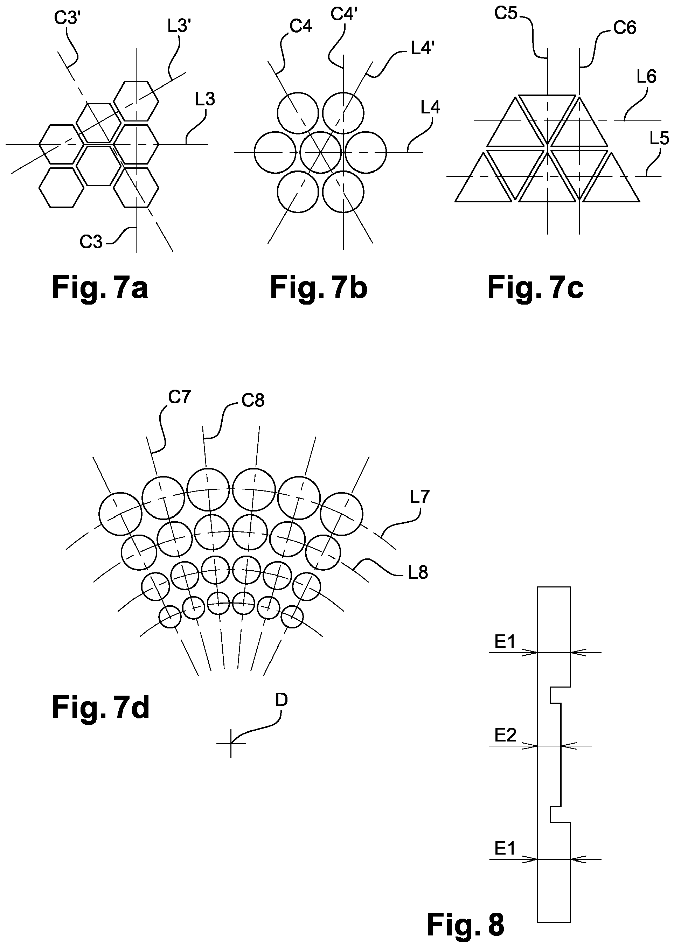

Les figures 7a à 7d sont des variantes de réalisation des motifs 132.

Dans la figure 7a, les motifs sont des polygones et plus exactement des hexagones. Ils sont répartis en lignes et colonnes. On peut considérer des lignes rectilignes L3 parallèles à l'axe d'allongement de l'adaptateur ou des lignes rectilignes L3' inclinées par rapport à cet axe. Le même raisonnement s'applique pour les colonnes C3, C3'.

Dans la figure 7b, les motifs sont des ronds. Ils sont répartis en lignes et colonnes. De la même façon que dans le précédent cas, on peut considérer des lignes L4 ou L4', et des colonnes C4 ou C4'.

Dans la figure 7c, les motifs sont des triangles dont certains sont disposés de façon à ce que leurs sommets soient orientés vers le bas, et d'autres sont disposés de façon à ce que leurs sommets soient orientés vers le haut. Ils sont répartis en lignes L5, L6 et colonnes C5, C6.

Dans la figure 7d, les motifs sont des ronds dont les dimensions (diamètre) varient d'une ligne L7 à l'autre L8. Ces lignes ne sont pas rectilignes mais sont au contraire incurvées autour d'un centre D commun. Les colonnes C7, C8 sont rectilignes et s'étendent sensiblement radialement par rapport à ce centre D.

La figure 7d montre ainsi que les motifs en saillie n'ont pas forcément tous les mêmes dimensions, et en particulier le même diamètre dans le cas de ronds.

La figure 8 montre que les motifs peuvent également différer par leurs épaisseurs. Les motifs d'une même ligne ou colonne peuvent avoir une épaisseur E1 différente de celle E2 de motifs d'une ligne ou colonne adjacente. Les motifs d'une même ligne ou colonne peuvent présenter des épaisseurs E1, E2 différentes. Ces épaisseurs peuvent être mesurées depuis le fond des rainures formant les canaux de drainage 150.

Dans les différents exemples illustrés les motifs en saillie sont séparés les uns des autres par des rainures formant des canaux de drainage qui sont, sur au moins une partie de leur longueur, inclinés par rapport à l'axe longitudinal de l'adaptateur. Ces canaux, quelque soit la géométrie des motifs, facilite le guidage recherché en améliorant l'écoulement d'eau entre l'adaptateur et le connecteur.

## Revendications

1. Adaptateur (112) pour relier un balai (10, 110, 110') d'essuie-glace à un bras d'entraînement (26), l'adaptateur comprenant deux parois (28) sensiblement parallèles reliées ensemble par au moins un élément de liaison (30), lesdites parois comportant des premières faces latérales internes (28a) entre lesquelles s'étend ledit au moins un élément de liaison, et des faces latérales externes (28b) comportant des motifs en saillie (132) de guidage par glissement, lesdits motifs étant répartis en lignes et colonnes, **caractérisé en ce que** lesdits motifs (132) sont séparés les uns des autres par des rainures formant des canaux de drainage qui sont, sur au moins une partie de leur longueur, inclinés par rapport à l'axe longitudinal de l'adaptateur.

2. Adaptateur (112) selon la revendication 1, dans lequel lesdits motifs (132) recouvrent plus de 50%, et de préférence plus de 80%, desdites faces latérales externes (28b).

3. Adaptateur (112) selon la revendication 1 ou 2, dans lequel lesdits motifs (132) ont des formes géométriques identiques.

4. Adaptateur (112) selon l'une des revendications précédentes, dans lequel au moins une partie desdits motifs (132) forment des carrés, des ronds, des losanges, des triangles, et/ou des polygones.

5. Adaptateur (112) selon l'une des revendications précédentes, dans lequel lesdits motifs (132) ont tous la même épaisseur.

6. Adaptateur selon l'une des revendications 1 à 4, comprenant sur chacune desdites faces latérales externes (28b), des premiers motifs d'épaisseur E1 et des seconds motifs d'épaisseur E2 différente de E1.

7. Adaptateur (112) selon l'une des revendications précédentes, dans lequel chacune desdites faces latérales externes (28b) comprend plus de dix motifs.

8. Adaptateur (112) selon l'une des revendications précédentes, dans lequel ledit au moins élément de liaison (30) définit une goulotte qui est sensiblement perpendiculaire auxdites parois et qui est configurée pour recevoir et guider un axe (38) de rotation dudit adaptateur.

9. Adaptateur (112) selon l'une des revendications précédentes, dans lequel lesdits canaux de drainage (150) forment un quadrillage.

10. Adaptateur (112) selon l'une des revendications précédentes, dans lequel chacune desdites rainures a une largeur comprise entre 0,1 et 1mm et par exemple de l'ordre de 0,5mm.

11. Adaptateur (112) selon l'une des revendications précédentes, dans lequel chacune desdites rainures a en section une forme en U ou V.

12. Balai (10, 110, 110') d'essuie-glace, **caractérisé en ce qu'**il comprend ou porte un adaptateur (112) selon l'une des revendications précédentes.

13. Bras (26) d'essuie-glace, **caractérisé en ce qu'**il comprend ou porte un adaptateur (112) selon l'une des revendications 1 à 12.

## Patentansprüche

1. Adapter (112) zum Verbinden eines Scheibenwischerblatts (10, 110, 110') mit einem Antriebsarm (26), wobei der Adapter zwei im Wesentlichen parallele Wände (28) umfasst, die durch mindestens ein Verbindungselement (30) miteinander verbunden sind, wobei die Wände erste laterale Innenflächen (28a), zwischen denen sich das mindestens eine Verbindungselement erstreckt, und laterale Außenflächen (28b), die vorstehende Gleitführungsmuster (132) aufweisen, aufweisen, wobei die Muster in Reihen und Spalten verteilt sind, **dadurch gekennzeichnet, dass** die Muster (132) durch Nuten voneinander getrennt sind, die Ablaufkanäle bilden, welche mindestens über einen Teil ihrer Länge bezüglich der Längsachse des Adapters geneigt sind.

2. Adapter (112) nach Anspruch 1, wobei die Muster (132) mehr als 50%, vorzugsweise mehr als 80%, der lateralen Außenflächen (28b) bedecken.

3. Adapter (112) nach Anspruch 1 oder 2, wobei die Muster (132) identische geometrischen Formen haben.

4. Adapter (112) nach einem der vorhergehenden Ansprüche, wobei mindestens ein Teil der Muster (132) Quadrate, Kreise, Rauten, Dreiecke und/oder Vielecke bildet.

5. Adapter (112) nach einem der vorhergehenden Ansprüche, wobei die Muster (132) alle die gleiche Dicke haben.

6. Adapter (112) nach einem der Ansprüche 1 bis 4, der auf jeder der lateralen Außenflächen (28b) erste Muster mit einer Dicke E1 und zweite Muster mit einer Dicke E2, die von E1 verschieden ist, umfasst.

7. Adapter (112) nach einem der vorhergehenden Ansprüche, wobei jede der lateralen Außenflächen (28b) mehr als zehn Muster umfasst.

8. Adapter (112) nach einem der vorhergehenden Ansprüche, wobei das mindestens eine Verbindungselement (30) eine Rinne definiert, die im Wesentlichen senkrecht zu den Wänden verläuft und die zum Aufnehmen und Führen einer Drehachse (38) des Adapters konfiguriert ist.

9. Adapter (112) nach einem der vorhergehenden Ansprüche, wobei die Ablaufkanäle (150) ein Karomuster bilden.

10. Adapter (112) nach einem der vorhergehenden Ansprüche, wobei jede der Nuten eine Breite zwischen 0,1 und 1 mm und zum Beispiel in der Größenordnung von 0,5 mm hat.

11. Adapter (112) nach einem der vorhergehenden Ansprüche, wobei jede der Nuten einen U- oder V-förmigen Querschnitt aufweist.

12. Scheibenwischerblatt (10, 110, 110'), **dadurch gekennzeichnet, dass** es einen Adapter (112) nach einem der vorhergehenden Ansprüche aufweist oder trägt.

13. Scheibenwischerarm (26), **dadurch gekennzeichnet, dass** er einen Adapter (112) nach einem der Ansprüche 1 bis 12 aufweist oder trägt.

## Claims

1. An adapter (112) for connecting a wiper (10, 110, 110') to a drive arm (26), the adapter comprising two substantially parallel walls (28) joined together by at least one connecting element (30), said walls comprising internal first lateral faces (28a) between which said at least one connecting element extends, and external lateral faces (28b) comprising projecting sliding-guidance patterns (132), said patterns being distributed in rows and columns, **characterized in that** said patterns (132) are separated from one another by grooves that form drainage channels which are, over at least part of their length, inclined with respect to the longitudinal axis of the adapter.

2. The adapter (112) as claimed in claim 1, in which said patterns (132) cover more than 50%, and preferably more than 80%, of said external lateral faces (28b).

3. The adapter (112) as claimed in claim 1 or 2, in which said patterns (132) have identical geometric shapes.

4. The adapter (112) as claimed in one of the preceding claims, in which at least some of said patterns (132) form squares, circles, diamonds, triangles and/or polygons.

5. The adapter (112) as claimed in one of the preceding claims, in which said patterns (132) all have the same thickness.

6. The adapter (112) as claimed in one of claims 1 to 4, comprising on each of said external lateral faces (28b), first patterns of thickness E1 and second patterns of thickness E2 different than E1.

7. The adapter (112) as claimed in one of the preceding claims, in which each of said external lateral faces (28b) comprises more than ten patterns.

8. The adapter (112) as claimed in one of the preceding claims, in which said at least one connecting element (30) defines a throat which is substantially perpendicular to said walls and which is configured to receive and guide a pivot (38) about which said adapter rotates.

9. The adapter (112) as claimed in one of the preceding claims, in which said drainage channels (150) form a grid pattern.

10. The adapter (112) as claimed in one of the preceding claims, in which each of said grooves has a width comprised between 0.1 and 1 mm, and for example of the order of 0.5 mm.

11. The adapter (112) as claimed in one of the preceding claims, in which each of said grooves has a U-shaped or V-shaped cross section.

12. A wiper (10, 110, 110'), **characterized in that** it comprises or bears an adapter (112) as claimed in one of the preceding claims.

13. A wiper arm (26), **characterized in that** it comprises or bears an adapter (112) as claimed in one of claims 1 to 12.
